(19) Europäisches Patentamt / European Patent Office / Office européen des brevets

(11) **EP 3 966 166 B1**

(12) **EUROPÄISCHE PATENTSCHRIFT**

(45) Veröffentlichungstag und Bekanntmachung des Hinweises auf die Patenterteilung:
**11.09.2024  Patentblatt 2024/37**

(21) Anmeldenummer: **20723874.2**

(22) Anmeldetag: **08.05.2020**

(51) Internationale Patentklassifikation (IPC):
***C01G 9/06*** *(2006.01)*

(52) Gemeinsame Patentklassifikation (CPC):
**C01G 9/06**

(86) Internationale Anmeldenummer:
**PCT/EP2020/062878**

(87) Internationale Veröffentlichungsnummer:
**WO 2020/225421 (12.11.2020 Gazette 2020/46)**

(54) **VERFAHREN ZUR LAGERUNG CON ZINK-SULFATSALZEN UNTER VERWENDUNG VON RIESELHILFEN**

PROCESS FOR THE STORAGE OF ZINC SULPHATE SALTS USING TRICKLING AIDS

PROCÉDÉ DE STOCKAGE DE SELS DE SULFATE DE ZINC AVEC UTILISATION D'AUXILIAIRES D'ÉCOULEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2019  EP 19173577**

(43) Veröffentlichungstag der Anmeldung:
**16.03.2022  Patentblatt 2022/11**

(73) Patentinhaber: **Grillo-Werke AG**
**47169 Duisburg (DE)**

(72) Erfinder:
• **RÉTHORÉ, Céline**
**47169 Duisburg (DE)**
• **OTT, Timo**
**47169 Duisburg (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
CA-A1- 2 226 571     US-A- 5 286 272
US-A1- 2004 050 126

**Beschreibung**

Die vorliegende Erfindung betrifft die Verwendung einer Verbindung AB als Rieselhilfe in Zink-Sulfatsalzen, wobei

- in der Verbindung AB
- A ausgewählt ist aus Zink,
- B ausgewählt ist aus Hydroxid (OH$^-$), Oxidanion (O$^{2-}$), Carbonat, Phosphat, Hydrogencarbonat oder Silikat,

. Weiterhin betrifft die vorliegende Erfindung eine Mischung umfassend ein Zink-Sulfatsalz sowie eine Verbindung AB wie zuvor beschrieben sowie ein Verfahren zur Lagerung von Sulfatsalzen.

Zinksulfat ist ebenso wie andere gehandelte Metallsulfate (beispielsweise Alkalimetallsulfate, Erdalkalimetallsulfate, Übergangsmetallsulfate oder Aluminiumsulfat) oder auch andere Salze mit anderen Anionen ein rieselfähiger Feststoff, der in Säcken abgefüllt wird. Das feine teilweise kristalline Pulver verklumpt jedoch beim Lagern innerhalb von Tagen, Wochen und Monaten durch die Aufnahme von Feuchtigkeit durch die Säcke hindurch und durch bei der Lagerung entstehenden Druck, wenn die Säcke entsprechend gestapelt werden. Hier könnten Rieselhilfsmittel (Anti-Caking-Mittel) Abhilfe schaffen. Sie benetzen feine Partikel, nehmen gegebenenfalls Feuchtigkeit auf oder führen zu einer mechanischen Beanspruchung im Bulk, die dafür sorgt, dass zusammengebackener Feststoff zerrieben wird.

CA 2 226 571 A1 beschreibt tablettenförmige Ionenpolymere, Verfahren zu ihrer Herstellung und ihre Verwendung in der Wasseraufbereitung. Die Tablette enthält etwa 5 bis etwa 60 Gewichtsprozent eines Ionenpolymers, etwa 40 bis etwa 95 Gewichtsprozent einer Salzträgermatrix, 0 bis etwa 20 Gewichtsprozent eines Zerfallsratenregulators und 0 bis etwa 10 Gewichtsprozent eines Antibackmittels. Die Erfindung beschreibt ein Verfahren zur Kontrolle des Wachstums von Mikroorganismen in einem wässrigen System, bei dem das Wachstum mindestens eines Mikroorganismus kontrolliert wird.

US 2004/050126 A1 beschreibt einen Flüssigdünger, der eine Mischung aus löslichen und unlöslichen Formen von Nährstoffen enthält. Die Nährstoffe sind dabei ausgewählt aus der Gruppe bestehend aus Zink, Kupfer, Mangan, Bor, Calcium, Eisen, Calciumsulfat (Gips), Magnesium, Molybdän, Chlorid, Selen, Phosphat, Stickstoff, Kalium und Schwefel.

US5286272 beschreibt anorganische Düngemittelzusammensetzung, die frei fließt und nicht zum Verklumpen neigt, umfassend mindestens ein nützliches Mittel und ein Antibackmittel in einer Menge, die ausreicht, um die Verklumpungstendenz des nützlichen Mittels zu verringern, wobei das Antibackmittel Tripotassiumphosphat ist. In einer bevorzugten Ausführungsform wird das Antibackmittel in einer Menge im Bereich von 0,25 bis 5,0 Gew.-% zugesetzt.

Somit gibt es im Stand der Technik keine Rieselhilfsmittel für Zinksulfat-Salze, welche verhindern, dass Zinksulfat-Salze während des Lagerns über Tage, Wochen oder Monate nicht verklumpen und keine Fremdkationen miteinbringen.

Der vorliegenden Erfindung liegt daher die Aufgabe zugrunde, ein Rieselhilfsmittel für Zink-Sulfatsalze bereitzustellen. Insbesondere soll ein Rieselhilfsmittel bereitgestellt werden, welches es verhindert, dass Zink-Sulfatsalze während des Lagerns über Tage, Wochen oder Monate verklumpen.

In einer ersten Ausführungsform wird die erfindungsgemäße Aufgabenstellung gelöst durch die Verwendung einer Verbindung AB als Rieselhilfe in Zink-Sulfatsalzen , wobei

- in der Verbindung AB
- A ausgewählt ist aus Zink, und
- B ausgewählt ist aus Hydroxid (OH$^-$), Oxidanion (O$^{2-}$), Carbonat, Phosphat, Hydrogencarbonat oder Silikat"

. Weiterhin betrifft die vorliegende Erfindung eine Mischung umfassend ein Zink-Sulfatsalz sowie eine Verbindung AB wie zuvor beschrieben sowie ein Verfahren zur Lagerung von Zink-Sulfatsalzen.

Die Verbindung AB kann somit als Salz angesehen werden, welches ein Kation A und ein Anion B darstellt. Das Anion B ist sauerstoffbasiert. Im Sinne der vorliegenden Erfindung kann AB auch ein Oxid sein. In diesem Sinne stellt Sauerstoff in Form von O$^{2-}$ das Anion B dar.

Die Verbindung AB ist in ihrer Gesamtladung neutral. Wenn nun das Anion doppelt negativ geladen ist, wie beispielsweise bei O$^{2-}$, so enthält die Verbindung AB entweder zwei einfach geladene Kationen A$^+$ (so dass man eine Verbindung A$_2$B vorliegen hat), oder ein zweifach positiv geladenes Kation A$^{2+}$ (so dass man eine Verbindung AB vorliegen hat). Entsprechendes gilt für höher geladene Kationen, so dass auch Verbindungen AB$_2$ oder A$_2$B$_3$ etc. vorliegen können und von der vorliegenden Definition von AB umfasst sind. Entsprechend kann die Verbindung AB auch als Verbindung A$_x$B$_y$ dargestellt werden, wobei x und y derart gewählt sind, dass bei Auftreten einer Ladung in einem der Bestandteile A oder B, die Gesamtverbindung AB neutral ist.

Überraschenderweise hat sich gezeigt, dass Salze, die sauerstoffbasierte Anionen enthalten, also Verbindungen AB, als Rieselhilfsmittel in Zink-Sulfatsalzen eingesetzt werden können, womit die Lagerung von Sulfatsalzen ohne Verklumpen über mehrere Tage, Wochen oder Monate ermöglicht wird.

In einer erfindungsgemäßen Ausführungsform handelt es sich bei dem sauerstoffbasierten Anion B der Verbingung AB um ein Hydroxid- und/oder Oxidanion. Die erfindungsgemäß verwendete Verbindung AB umfasst in dieser Ausführungsform demnach $OH^-$- und/oder $O^{2-}$-Ionen. Die Verbindung kann ausschließlich $OH^-$- und $O^{2-}$-Ionen enthalten oder neben den genannten noch weitere Anionen enthalten. Die Verbindung kann auch ausschließlich $OH^-$- oder ausschließlich $O^{2-}$-Anionen enthalten.

Es hat sich überraschenderweise gezeigt, dass insbesondere Oxide als Rieselhilfe in Sulfatsalzen geeignet sind. Besonders bevorzugt handelt es sich bei der erfindungsgemäß verwendeten Verbindung daher um ein Oxid.

Erfindungsgemäß kann es sich bei dem sauerstoffbasierten Anion B der Verbindung AB auch um ein Carbonat, Phosphat, Hydrogencarbonat, oder Silikat handeln, wobei die Verbindung AB auch Mischungen der genannten Anionen enthalten kann oder die Anionen ausschließlich aus den genannten Anionen ausgewählt sein können oder die Verbindung ausschließlich eines der genannten Anionen enthalten kann.

Geeignete Silikate umfassen insbesondere Silikate mit $SiO_3^-$, oder $Si_4O_{10}$-Einheiten. Insbesondere können auch Aluminosilikate verwendet werden.

Neben dem sauerstoffbasierten Anion B enthält die als Rieselhilfe verwendete Verbindung AB noch den Bestandteil A, der als Kation vorliegen kann. In einer erfindungsgemäßen Ausführungsform umfasst die Verbindung AB ein Kation A des Zinks..

In einer bevorzugten Ausführungsform ist die Verbindung ausgewählt aus ZnO.

Bei dem Sulfatsalz $XSO_4$, in dem die Verbindung AB als Rieselhilfe eingesetzt wird, handelt es sich in einer erfindungsgemäßen Ausführungsform um ein Sulfatsalz des Zinks. Besonders bevorzugt handelt es sich bei dem Sulfatsalz um Zinksulfat ($ZnSO_4$). Diese kann auch als Hydrat, insbesondere als Hexahydrat, Heptahydrat oder Monohydrat vorliegen. Abhängig von der Ladung des Kations X kann das Sulfatsalz auch als $X_o(SO_4)_m$ beschrieben werden, wobei o und m so gewählt sind, dass das Salz als Gesamtmolekül neutral ist.

Die Kationen in der Verbindung AB, die als Rieselhilfe eingesetzt wird, und in dem Sulfatsalz sind gleich. Hierdurch weist die Erfindung den besonderen Vorteil auf, dass durch die Rieselhilfe lediglich Fremdanionen und keine Fremdkationen in das Material eingebracht werden.

Weiterhin ist es bevorzugt, dass die als Rieselhilfe verwendete Verbindung den gleichen Reinheitsgrad wie das Sulfatsalz aufweist. Auf diese Weise kann vermieden werden, dass das Sulfatsalz mit zusätzlichen Verunreinigungen belastet wird.

Besonders bevorzugt wird ZnO als Rieselhilfe in $ZnSO_4$ verwendet.

Das Salz, das als Rieselhilfe verwendet wird, kann grobkörnig oder feinkörnig sein. Insbesondere kann das Salz, das als Rieselhilfe verwendet wird, in Form von Nanopartikeln verwendet werden. Besonders bevorzugt werden ZnO-Partikel, insbesondere Nanopartikel verwendet.

In einer bevorzugten Ausführungsform wird das Salz, das als Rieselhilfe verwendet wird, dem Sulfatsalz in einer Menge von 0,0001 bis 5 Gew.-% zugegeben. Besonders bevorzugt liegt die Menge in einem Bereich von 0,01 bis 1 Gew.-%.

In einer alternativen Ausführungsform wird die der Erfindung zugrundeliegende Aufgabenstellung gelöst durch eine Mischung umfassend ein Sulfatsalz und ein Rieselhilfsmittel, wobei es sich bei dem Rieselhilfsmittel um das zuvor beschriebene erfindungsgemäß als Rieselhilfe verwendete Salz handelt.

Die Mischung kann prinzipiell jedes der zuvor beschriebenen Sulfatsalze und jedes der zuvor beschriebenen Salze umfassend ein sauerstoffbasiertes Anion enthalten.

Der Gehalt des Rieselhilfsmittels in der Mischung beträgt in einer bevorzugten Ausführungsform 0,01 bis 5 Gew.-%, vorzugsweise 0,05 Gew.-% bis 3 Gew.-%, bevorzugt von 0,1 Gew.-% bis 2 Gew.-%. Besonders bevorzugt beträgt der Gehalt des Rieselhilfsmittels 0,51 bis 1 Gew.-%. Größere Mengen an Rieselhilfsmittel (Verbindung AB) verbessern die Lagerstabilität nicht wesentlich, verändern jedoch unter Umständen die Eigenschaften des Sulfatsalzes. Wird beispielsweise ZnO als Rieselhilfsmittel für Zn-Sulfat verwendet, so ist neben der Lagerstabilität auch die Löslichkeit des Sulfatsalzes relevant. Liegt der Anteil über 1 Gew.-%, so kann Zn-Sulfat nicht mehr als klare Lösung in Wasser gelöst werden. Da ein Anteil an Rieselhilfsmittel AB von 0,1 Gew.-% bis 1 Gew.-% für eine gute Lagerstabilität und gleichzeitig eine geringe Beeinflussung der sonstigen Eigenschaften des Sulfatsalzes führt, ist dieser Anteil besonders bevorzugt.

In einer bevorzugten Ausführungsform handelt es sich bei dem Sulfatsalz um $ZnSO_4$. In einer weiteren Ausführungsform handelt es sich bei dem Rieselhilfsmittel um ZnO. Insbesondere handelt es sich bei der erfindungsgemäßen Mischung um eine Mischung von $ZnSO_4$ und ZnO.

Besonders bevorzugt handelt es sich bei der erfindungsgemäßen Mischung um eine Mischung von $ZnSO_4$ und 0,01 bis 5 Gew.-%, insbesondere 0,1 bis 1 Gew.-%, ZnO.

In einer alternativen Ausführungsform wird die der Erfindung zugrundeliegende Aufgabenstellung gelöst durch ein Verfahren zur Lagerung von Sulfatsalzen, wobei das Sulfatsalz mit einem Rieselhilfsmittel gemischt wird und die Mischung anschließend gelagert wird, wobei es sich bei dem Rieselhilfsmittel um die zuvor beschriebene erfindungsgemäß als Rieselhilfe verwendete Verbindung AB handelt.

In dem erfindungsgemäßen Verfahren kann prinzipiell jedes der zuvor beschriebenen Sulfatsalze und jedes der zuvor beschriebenen Salze (Verbindungen AB) umfassend ein Anion ausgewählt aus Hydroxid (OH⁻), Oxidanion ($O^{2-}$), Carbonat, Phosphat, Hydrogencarbonat oder Silikat zum Einsatz kommen.

In einer bevorzugten Ausführungsform des erfindungsgemäßen Verfahrens wird als Sulfatsalz ein Sulfatsalz des Zinks, insbesondere $ZnSO_4$, eingesetzt. Als Rieselhilfsmittel wird vorzugsweise ein Zinksalz und besonders bevorzugt ZnO eingesetzt.

Das Rieselhilfsmittel wird vorzugsweise in einer Konzentration von 0,01 bis 5 Gew.-%, insbesondere 0,1 bis 1 Gew.-% eingesetzt. Erfindungsgemäß werden das Sulfatsalz und das Rieselhilfsmittel vermischt. Das Mischen kann mit einer Mischvorrichtung, wie beispielsweise einem Rollenmischer oder Betonmischer erfolgen. Nach dem Mischen wird das mit dem Rieselhilfsmittel vermischte Sulfatsalz gelagert. Die Lagerung erfolgt insbesondere für einen Zeitraum von wenigstens 48 Stunden, bevorzugt für einen Zeitraum von wenigstens 2 Wochen, besonders bevorzugt für einen Zeitraum von wenigstens 2 Monaten, ganz besonders bevorzugt von wenigstens 6 Monaten. Die Lagerung erfolgt insbesondere für einen Zeitraum von bis zu 24 Monaten, bevorzugt bis zu 12 Monaten.

Durch den erfindungsgemäßen Einsatz des erfindungsgemäßen Rieselhilfsmittels weist das erfindungsgemäße Verfahren zur Lagerung von Sulfatsalzen den überraschenden Vorteil auf, dass die Sulfatsalze über längere Zeit gelagert werden können, ohne zu verklumpen.

Erfindungsgemäß können alle Merkmale einer Ausführungsform in beliebiger Art und Weise miteinander kombiniert werden. Alle Merkmale einer Ausführungsform können mit allen offenbarten Ausführungsformen kombiniert werden. In den nachfolgenden Ausführungsbeispielen wird die vorliegende Erfindung in nicht limitierender Art und Weise weiter erläutert.

Ausführungsbeispiele

Beispiel 1

Verwendete Chemikalien:

- Zinksulfat Hexahydrat technisch ($ZnSO_4 \cdot 6\ H_2O$)
- Zinksulfat Heptahydrat USP ($ZnSO_4 \cdot 7\ H_2O$)
- Zinksulfat Monohydrat USP ($ZnSO_4 \cdot H_2O$)
- Zinkoxid (ZnO)

Versuchsdurchführung:

20 kg des technischen Zinksulfat-Hexahydrats und 25 kg des Zinksulfat-Heptahydrat USP sowie 25 kg des Zinksulfat-Monohydrat USP wurden jeweils mit 0,1 Gew.% ZnO in einem Betonmischer vorgelegt und für 24 h durchmischt. Anschließend wurde die Gesamtmenge jeweils in Säcken abgefüllt und diese zur weiteren Lagerung zugenäht.

Jeweils 25 kg Zinksulfat-Heptahydrat USP und 25 kg Zinksulfat-Monohydrat USP wurden unverändert als Referenz ebenfalls eingelagert und beobachtet.

Die Lagerung erfolgte bei atmosphärischen Bedingungen unter Raumtemperatur.

Zur Bestimmung der Rieselfähigkeit des Materials wurde jeder Sack zunächst in der Mitte angehoben. Anschließend wurden die obere rechte und die obere linke Ecke angehoben und abschließend die untere rechte und untere linke Ecke.

Auswertung:

Das mit 0,1 Gew.% ZnO zugesetzte, technische Zinksulfat-Hexahydrat erhält auch noch nach 10 Monaten eine gute Rieselfähigkeit, die sich zur weiteren Verarbeitung eignet.

Das Zinksulfat-Heptahydrat USP mit ZnO Zusatz bleibt für 13 Wochen gut rieselfähig, so dass eine weitere Verarbeitung leicht möglich ist. Nach 5 Monaten härtet das Material etwas weiter aus, wodurch eine weitere Verarbeitbarkeit geringfügig eingeschränkt wird.

Der Referenzversuch des Zinksulfat-Heptahydrats USP ist bereits nach 4 Wochen soweit ausgehärtet, dass eine Verarbeitung deutlich erschwert und nach 6 Wochen bereits kaum mehr möglich ist.

Das Zinksulfat-Monohydrat USP mit ZnO-Zusatz bleibt auch nach 10 Monaten leicht rieselfähig und ermöglicht eine einfache Weiterverarbeitung.

Der Referenzversuch des Zinksulfat-Monohydrats USP zeigt deutlich, dass die Rieselfähigkeit des Materials im Allgemeinen bis zu 7 Monate erhalten bleibt, erst nach 10 Monaten ist das Material beinahe vollständig ausgehärtet und erschwert eine Verarbeitung deutlich.

Die Analyse des Zinksulfat-Heptahydrats USP mit ZnO-Zusatz ergab einen Gesamtzinkgehalt von 24,2 Gew.% und erfüllt die USP/FCC Norm.

Rieselfähigkeit-Skala:

sehr feines                      Pulver krümelig                          hart/fest

1 -------------------------------------- 5 -------------------------------------- 10

Tabelle 1: Ergebnisse der Aushärtungsversuche nach Vorbehandlung mit dem Betonmischer

| (w = Woche; m = Monat) | | | | | | | | | |
|---|---|---|---|---|---|---|---|---|---|
| Zeit | 4w | 6w | 8w | 10w | 13w | 5m | 6m | 7m | 10m |
| Techn. Hexahydrat | 2 | 2 | 2 | 2 | 2-3 | 2 | 2-3 | 2-3 | 2-3 |
| Heptahydrat USP | 3 | 3 | 3 | 3 | 3 | 3-4 | 3-4 | 3-4 | 3-4 |
| Heptahydrat USP Referenz | 6-7 | 8 | 8 | 8 | 9 | 9 | 9 | 9 | 9 |
| Monohydrat USP | 1 | 1 | 1 | 1 | 1 | 1 | 1 | 1 | 2 |
| Monohydrat USP Referenz | 1 | 1 | 1 | 1 | 1 | 1 | 1 | 1-2 | 9 |

Beispiel 2

Verwendete Chemikalien:

- Zinksulfat Hexahydrat ($ZnSO_4 \cdot 6\ H_2O$)
- Zinkoxid (ZnO)
- Zinkoxid Nanotec (ZnO)
- Magnesiumcarbonat ($MgCOs$)
- $\gamma$-Aluminiumoxid ($\gamma$-Al2O$_3$)
- Siliciumoxid ($SiO_2$)
- Tricalciumphosphat ($Ca_3(PO_4)_2$)
- Natriumhydrogencarbonat ($NaHCO_3$)
- Natriumsilikat ($Na_2SiO_3$)
- Talkumpulver ($Mg_3Si_4O_{10}(OH)_2$)
- Bentonit
- Polydimethylsiloxan ($C_2H_6OSi$)n
- Stearinsäure ($C_{18}H_{36}O_2$)
- Trockeneis ($CO_2$)

Versuchsdurchführung:

Für die Versuche wurden 100 g Zinksulfat Hexahydrat in 100 ml PE Flaschen vorgelegt und 1 Gew.% eines Rieselhilfsmittels zugesetzt. Es wurde für 24 h mittels Rollenmischer durchmischt. Anschließend wurden die Mischungen für mehrere Wochen stehen lassen und von Zeit zu Zeit die Pulver auf ihre Rieselfähigkeit kontrolliert und dokumentiert. Als Referenz wurden 100 g Zinksulfat Hexahydrat ebenfalls über mehrere Wochen stehen gelassen und von Zeit zu Zeit auf ihre Rieselfähigkeit überprüft.

Bei den Versuchen mit Magnesiumcarbonat, $\gamma$-Aluminiumoxid, Siliciumoxid, Tricalciumphosphat, Natriumhydrogencarbonat, Natriumsilikat, Talkumpulver, Bentonit, Polydimethylsiloxan, Stearinsäure und Trockeneis handelt es sich um Vergleichsversuche, die nicht von der vorliegenden Erfindung umfasst sind.

Rieselfähigkeit-Skala:

sehr feines                                    Pulver krümelig                                    hart/fest

1 -------------------------------------- 5 -------------------------------------- 10

Tabelle 2: Ergebnisse der ersten Versuchsreihe mit 100 g $ZnSO_4$ und 1 Gew.% Rieselhilfsmittel.

| (h = Stunde; d = Tag; w = Woche; m = Monat) | | | | | | | | | |
|---|---|---|---|---|---|---|---|---|---|
| Zeit | 24h | 48h | 7d | 9d | 11d | 14d | 3w | 5w | 2m |
| $MgCO_3/Mg(OH)_2$ | 2 | 2 | 9 | 9 | 10 | 10 | 9 | 10 | 10 |
| ZnO | 2 | 2 | 2 | 2 | 2 | 2 | 2 | 9 | 8 |
| $\gamma$-$Al_2O_3$ | 5 | 5 | 10 | 10 | 5 | 9 | 10 | 10 | 10 |
| $SiO_2$ | 2 | 2 | 2 | 2 | 2 | 2 | 1 | 8 | 10 |
| ZnO (Nanotec) | 1 | 1 | 1 | 2 | 2 | 2 | 2 | 2 | 3 |
| $CO_2$ (s) | 5 | 7 | 9 | 5 | 6 | 10 | 7 | 10 | 10 |
| Referenz | 6 | 8 | 10 | 10 | 10 | 10 | 9 | 10 | 10 |

Tabelle 3: Ergebnisse der zweiten Versuchsreihe mit 100 g $ZnSO_4$ und 1 Gew.% Rieselhilfsmittel.

| (h = Stunde; d = Tag; w = Woche; m = Monat) | | | | | | |
|---|---|---|---|---|---|---|
| Zeit | 24h | 48h | 96h | 9d | 3w | 8w |
| $Ca_3(PO_4)_2$ | 1 | 3 | 2 | 2 | 5 | 8 |
| $NaHCO_3$ | 1 | 8 | 8 | 8 | 9 | 9 |
| $Na_2SiO_3$ | 1 | 8 | 9 | 9 | 8 | 9 |
| $Mg_3Si_4O_{10}(OH)_2$ | 2 | 2 | 2 | 2 | 6 | 6 |
| $H_2Al_2O_6Si$ | 1 | 1 | 2 | 2 | 2 | 2 |
| $MgCO_3$ | 1 | 2 | 3 | 3 | 3 | 3 |
| $(C_2H_6OSi)_n$ | 1 | 10 | 10 | 10 | 10 | 10 |
| $C_{18}H_{36}O_2$ | 1 | 10 | 10 | 10 | 10 | 10 |

Es wurden für einige der eingesetzten Rieselhilfsmittel weitere Versuche mit geringeren Mengen Rieselhilfsmittel (0,5 Gew.% + 0,1 Gew.% + 0,01 Gew.%) angesetzt und analog den zuvor genannten Versuchen durchgeführt.

Tabelle 4: Optimierung der zugesetzten Mengen für 50 g Ansätze $ZnSO_4$.

| | Zeit | 24h | 96h | 5d | 2w | 3w | 1m |
|---|---|---|---|---|---|---|---|
| $Mg_3Si_4O_{10}(OH)_2$ | 0,5 Gew.% | 1 | 1 | 2 | 5 | 5 | 5 |
| | 0,1 Gew.% | 1 | 2 | 2 | 2 | 2 | 2 |
| | 0,01 Gew.% | 1 | 2 | 1 | 2 | 2 | 2 |

EP 3 966 166 B1

(fortgesetzt)

|  | Zeit | 24h | 96h | 5d | 2w | 3w | 1m |
|---|---|---|---|---|---|---|---|
| $H_2Al_2O_6Si$ | 0,5 Gew.% | 1 | 2 | 1 | 1 | 1 | 1 |
|  | 0,1 Gew.% | 1 | 2 | 2 | 3 | 3 | 3 |
|  | 0,01 Gew.% | 1 | 3 | 1 | 2 | 3 | 3 |
| $MgCO_3$ | 0,5 Gew.% | 1 | 2 | 1 | 1 | 1 | 1 |
|  | 0,1 Gew.% | 1 | 2 | 1 | 1 | 1 | 1 |
|  | 0,01 Gew.% | 1 | 2 | 1 | 1 | 1 | 1 |
| ZnO | 0,5 Gew.% | 1 | 1 | 1 | 1 | 1 | 1 |
| ZnO Nanotec | 0,5 Gew.% | 1 | 1 | 1 | 1 | 1 | 1 |

In einem letzten Schritt wurden Versuche in einem größeren Maßstab durchgeführt. Dazu wurden jeweils 1 kg Zinksulfat vorgelegt und je 0,1 Gew.% und 0,01 Gew.% Rieselhilfsmittel zugesetzt. Die Ansätze wurden auf dem Rollenmischer gut durchmischt und stehen gelassen. Analog den zuvor genannten Versuchen wurde auch hier die Rieselfähigkeit kontrolliert und dokumentiert.

Tabelle 5: 1 kg Ansätze für einige der eingesetzten Rieselhilfsmittel.

|  | Zeit | 24h | 6d | 2w | 3w | 4w | 6w |
|---|---|---|---|---|---|---|---|
| ZnO | 0,1 Gew.% | 4 | 5 | 7 | 5 | 5 | 5 |
|  | 0,01 Gew.% | 7 | 8 | 9 | 7 | 7 | 7 |
| ZnO Nanotec | 0,1Gew.% | 2 | 3 | 5 | 7 | 5 | 7 |
|  | 0,01 Gew.% | 3 | 4 | 9 | 9 | 9 | 9 |
| $Mg_3Si_4O_{10}(OH)_2$ | 0,1 Gew.% | 7 | 8 | 5 | 6 | 9 | 9 |
|  | 0,01 Gew.% | 2 | 2 | 5 | 5 | 5 | 7 |
| $H_2Al_2O_6Si$ | 0,1 Gew.% | 1 | 1 | 1 | 1 | 1 | 1 |
|  | 0,01 Gew.% | 2 | 2 | 2 | 2 | 1 | 5 |
| $MgCO_3$ | 0,1 Gew.% | 3 | 2 | 2 | 2 | 2 | 8 |
|  | 0,01 Gew.% | 2 | 5 | 9 | 9 | 8 | 9 |

Aus den ersten Versuchsreihen ergab sich, dass Talk, Bentonit und Magnesiumcarbonat eine mit Zinkoxid und Zinkoxid Nanotec vergleichbare Eignung als Rieselhilfsmittel aufweisen. Hierbei bleibt die Rieselfähigkeit des Zinksulfats mit zugesetztem Zinkoxid und Zinkoxid Nanotec bei 1 Gew.% für drei Wochen erhalten. Auch nach so langer Standzeit ließ sich ein feines Pulver feststellen, welches zur weiteren Verarbeitung gut geeignet wäre. Die Verringerung der Zusatzmenge zeigte eine deutliche Beeinträchtigung, da nach drei Wochen nur noch der Ansatz mit 0,1 Gew.% Zinkoxid pulvrig war. Die restlichen Ansätze waren nach drei Wochen fest geworden.

Der 1 kg Ansatz macht deutlich, dass die Fähigkeit, ein Verklumpen zu verhindern, mit zunehmender Ansatzgröße abnimmt. Nach drei Wochen sind die Ansätze größtenteils fest und lassen sich nicht gut weiterverarbeiten. Das Talk erhält die Rieselfähigkeit des Zinksulfats bei 1 Gew.% Zusatz sogar für acht Wochen, allerdings ist das Pulver nicht so fein, wie das Pulver, dem Zinkoxid zugesetzt wurde. Es ist dennoch möglich, das Pulver in diesem Zustand weiter zu verarbeiten. Die Ansätze mit Bentonit und Magnesiumcarbonat in Höhe von 1 Gew.%, sind nach acht Wochen weiterhin fein pulvrig. Eine anschließende Einschränkung der Zusatzmenge von Talk, Bentonit und Magnesiumcarbonat zeigte keinen Unterschied zu den höher konzentrierten Ansätzen in den Vorproben. Auch nach einem Monat waren die Ergebnisse für alle Ansätze so gut, dass sich daraus eine gute Weiterverarbeitung ergab.

Die 1 kg Ansätze zeigen auf, dass die Rieselfähigkeit auch mit Bentonit, Talk und Magnesiumcarbonat mit zunehmender Gesamtmasse etwas schlechter wird. Talk und Magnesiumcarbonat erzielen bis zu drei Wochen lang eine gute Wirkung, die Ansätze mit Bentonit sind sogar bis zu sechs Wochen pulvrig und für eine weitere Verarbeitung gut geeignet.

7

Tabelle 6: Gesamtzinkgehalt und Trockenrückstand bei 110°C einer erfindungsgemäßer Rieselhilfsmittel

| Rieselhilfsmittel | Zinkgehalt | Trockenrückstand 110°C |
|---|---|---|
| 0,1 Gew.% ZnO | 24,69 Gew.% | 67,50 % |
| 0,01 Gew.% ZnO | 24,62 Gew.% | 69,64 % |
| 0,1 Gew.% ZnO Nanotec | 24,86 Gew.% | 66,66 % |
| 0,01 Gew.% Nanotec | 24,80 Gew.% | 60,27 % |
| 0,1 Gew. % Talk | 24,86 Gew.% | 54,39 % |
| 0,01 Gew. % Talk | 25,39 Gew.% | 65,08 % |
| 0,1 Gew.% Bentonit | 25,94 Gew.% | 49,33 % |
| 0,01 Gew.% Bentonit | 25,32 Gew.% | 54,54 % |
| 0,1 Gew.% $MgCO_3$ | 24,97 Gew.% | 41,66 % |
| 0,01 Gew.% $MgCO_3$ | 24,77 Gew.% | 68,18 % |

**Patentansprüche**

1. Verwendung einer Verbindung AB als Rieselhilfe in Zink-Sulfatsalzen, wobei in der Verbindung AB

   • A ausgewählt ist aus Zink und
   • B ausgewählt ist aus Hydroxid ($OH^-$), Oxidanion ($O^{2-}$), Carbonat, Phosphat, Hydrogencarbonat oder Silikat .

2. Verwendung der Verbindung AB als Rieselhilfe gemäß Anspruch 1, wobei das Sulfatsalz $ZnSO_4$ oder Mischungen daraus umfasst oder daraus besteht.

3. Verwendung der Verbindung AB als Rieselhilfe gemäß einem oder mehreren der Ansprüche 1 oder 2, wobei die Verbindung AB ZnO ist.

4. Verwendung der Verbindung AB als Rieselhilfe gemäß einem oder mehreren der Ansprüche 1 bis 3, wobei das Salz dem Sulfatsalz in einer Menge von 0,01 bis 5 Gew.-%, insbesondere 0,1 bis 1 Gew.-%, zugegeben wird.

5. Verfahren zur Lagerung von Zink-Sulfatsalzen, insbesondere $ZnSO_4$, wobei das Sulfatsalz mit einem Rieselhilfsmittel gemischt wird und die Mischung anschließend gelagert wird, wobei es sich bei dem Rieselhilfsmittel um eine Verbindung AB, wie in einem oder mehreren der Ansprüche 1 bis 4 definiert, handelt.

**Claims**

1. Use of a compound AB as an anticaking agent in zinc sulfate salts,

   wherein in the compound AB
   A is selected from zinc, and
   B is selected from hydroxide ($OH^-$), oxide anion ($O^{2-}$), carbonate, phosphate, hydrogencarbonate, or silicate.

2. The use of compound AB as an anticaking agent according to claim 1, wherein the sulfate salt comprises, or consists of, $ZnSO_4$ or mixtures thereof.

3. The use of compound AB as an anticaking agent according to one or more of claims 1 or 2, wherein said compound AB is ZnO.

4. The use of compound AB as an anticaking agent according to one or more of claims 1 or 3, wherein the salt is added to said sulfate salt in an amount of from 0.01 to 5% by weight, especially from 0.1 to 1% by weight.

**5.** A method for storing zinc sulfate salts, especially ZnSO$_4$, in which said sulfate salt is admixed with an anticaking agent, and the mixture is subsequently stored, wherein said anticaking agent is a compound AB as defined in one or more of claims 1 to 4.

**Revendications**

**1.** Utilisation d'un composé AB comme anti-agglomérant dans des sels de sulfate de zinc,

où dans le composé AB,
A est choisi parmi zinc, et
B est choisi parmi hydroxyde (OH$^-$), anion d'oxyde (O$^{2-}$), carbonate, phosphate, hydrogénocarbonate, ou silicate.

**2.** Utilisation du composé AB comme anti-agglomérant selon la revendication 1, dans laquelle ledit sel de sulfate comprend, ou consiste en, ZnSO$_4$ ou des mélanges de ceux-ci.

**3.** Utilisation du composé AB comme anti-agglomérant selon l'une ou plusieurs des revendications 1 ou 2, dans laquelle le composé AB est le ZnO.

**4.** Utilisation du composé AB comme anti-agglomérant selon l'une ou plusieurs des revendications 1 à 3, dans laquelle le sel est ajouté au sel de sulfate dans une quantité de 0,01 à 5 % en poids, notamment de 0,1 à 1 % en poids.

**5.** Procédé pour stocker des sels de sulfate de zinc, notamment ZnSO$_4$, dans lequel le sel de sulfate est mélangé avec un anti-agglomérant et le mélange est ensuite stocké, dans laquelle ledit anti-agglomérant est un composé AB comme défini dans une ou plusieurs des revendications 1 à 4.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CA 2226571 A1
- US 2004050126 A1

- US 5286272 A